# EUROPÄISCHE PATENTSCHRIFT

(11) **EP 0 703 114 B1**
(45) Veröffentlichungstag und Bekanntmachung des Hinweises auf die Patenterteilung: **11.11.1998**
(21) Anmeldenummer: 95114348.6
(22) Anmeldetag: 13.09.1995
(51) Int. Cl.: B60N 3/08, A24F 19/08

(54) **Schubladenascher für Fahrzeuge**
Draw ashtray for vehicles
Cendrier à tiroir pour véhicules

(30) Priorität: 24.09.1994 DE 4434199
(43) Veröffentlichungstag der Anmeldung: 27.03.1996
(73) Patentinhaber: BECKER GROUP EUROPE GmbH, 42285 Wuppertal (DE)
(72) Erfinder: Dabringhaus, Volker, D-42109 Wuppertal (DE); Wegel, Peter, D-42283 Wuppertal (DE)

(56) Entgegenhaltungen:
- EP-A- 0 563 968
- DE-A- 3 939 498
- US-A- 4 426 752
- US-A- 4 494 806
- US-A- 4 550 470
- US-A- 4 576 252
- US-A- 4 660 881

## Beschreibung

Die Erfindung bezieht sich auf einen Schubladenascher für Fahrzeuge mit einem in eine Einbauöffnung einsetzbaren Aschergehäuse, einem darin beweglich geführten Aschertopf und einer aus einem Federmotor bestehenden Öffnungshilfe, um den Aschertopf nach dem Lösen einer Verriegelungseinrichtung aus dem Aschergehäuse heraus in die Gebrauchslage zu bewegen, wobei der Federmotor ein Ritzel antreibt, welches mit einer Zahnstange kämmt.

Ein durch die gattungsbildende US-A-4 660 881 bekanntgewordener Schubladenascher mit einem beweglich geführten Aschertopf ist mit einem ein Ritzel antreibenden Federmotor und einer einstückig am Aschertopf ausgeführten mit dem Ritzel kämmenden Zahnstange ausgebildet, um den Aschertopf nach dem Lösen einer Verriegelungseinrichtung geradlinig aus dem Aschergehäuse heraus in die Gebrauchslage zu bewegen.

Die derzeit zum Einsatz gelangenden Schubladenascher für Fahrzeuge bieten einen hohen Bedienungskomfort, indem durch bloßes Antippen des Aschertopfs eine Vertiegelungseinrichtung gelöst und der Aschertopf durch die Kraft von auf ihn einwirkender Federmittel bereichsweise aus dem Aschergehäuse in eine Gebrauchslage bewegt wird. Bei Nichtgebrauch wird der Aschertopf in das Aschergehäuse ohne besonderen Kraftaufwand zurückgeschoben, wodurch die Federmittel gespannt und die Verriegelungseinrichtung den Aschertopf wieder in der Nichtgebrauchslage hält. Der hohe Bedienungskomfort muß aber bei Schubladenaschern bekannter Art durch einen vielteiligen, komplizierten und oftmals auch großvolumigen Aufbau erkauft werden, insbesondere dann, wenn, wie es bei bestimmten Einbausituationen der Fall ist, eine bogenförmige Bewegungsbahn für den Aschertopf verlangt wird.

Der vorliegenden Erfindung liegt nun die Aufgabe zugrunde, einen Schubladenascher der eingangs genannten Art zur Verfügung zu stellen, der bei einem kompakten, unkomplizierten, nur wenige Einzelteile umfassenden und preisgünstigen Aufbau die erwünschten Komfortansprüche erfüllt, und zwar unabhängig davon, ob für den Aschertopf eine geradlinige oder bogenförmige Bewegungsbahn vorzusehen ist.

Ausgehend von dieser Aufgabenstellung wird bei einem Schubladenascher der eingangs erwähnten Art erfindungsgemäß vorgeschlagen, daß die Zahnstange geradlinig beweglich geführt ist und einen Mitnehmer mit einem am Aschertopf angreifenden Mitnehmersteg aufweist, der eine Anlageberührung über den gesamten Öffnungshub des Aschertopfs gewährleistet.

Gemäß einer besonderen Ausführungsform ist dabei der Mitnehmer am freien Zahnstangenende angeordnet, etwa rechtwinklig zur Zahnstange ausgerichtet und steht mit der Rückwand des Aschertopfs in Anlageberührung.

Durch ein Lösen der Verriegelungseinrichtung wird der Federmotor in Gang gesetzt, das Ritzel angetrieben, über das Ritzel die Zahnstange und über deren Mitnehmersteg der Aschertopf in die Gebrauchslage bewegt. Die Zahnstange gleitet in einer einfachen geradlinigen Führungsbahn, während der Aschertopf sowohl geradlinig aber auch, wie es in der Praxis oftmals verlangt wird, eine bogenförmige Öffnungsbahn durchlaufen kann. Bei dem Durchlaufen einer kurvenförmigen Öffnungsbahn entfernt sich zwangsläufig die Übergangskante zwischen dem Aschertopfboden und der Aschertopfrückwand von der Horizontalen, wobei der Abstand nach dem Zurücklegen des halben Bewegungshubs am größten ist. Die Erfindung gleicht dies in einfachster Weise durch den Mitnehmersteg aus, der lediglich in seiner Länge so zu bemessen ist, daß der Anlagekontakt mit dem Aschertopf über den gesamten Öffnungshub aufrechterhalten bleibt.

Der angestrebte einfache, kompakte und funktionssichere Aufbau des Schubladenaschers wird ferner dadurch gewährleistet, daß gemäß einer Weiterbildung der Erfindung vorgesehen ist, daß der Federmotor in einem flachen, zylindrischen Gehäuse sitzt, das zusammen mit dem Ritzel und ebenso wie die Zahnstange an der Unterseite des Aschergehäusebodens angeordnet ist, wobei der Aschergehäuseboden eine Schlitzöffnung zum Durchlaß des Mitnehmerstegs aufweist. Dabei sollten sich dann in weiterer Ausgestaltung der Erfindung an der Unterseite des Gehäusebodens beidseitig der Schlitzöffnung Führugsschienen für die Halterung und Führung der Zahnstange befinden.

Gemäß einer Weiterbildung der Erfindung kann die Zhhnstange einen rechteckigen Querschnitt und an beiden Schmalkanten eine Verahnung aufweisen, von denen die eine mit dem vom Federmotor angetriebenen Ritzel und die andere mit einem zu einer ebenfalls am Gehäuseboden angeordneten Bremse gehörenden Ritzel kämmt. Ein Kämmen der Ritzel mit der Zahnstangenverzahnung wird in einfacher Weise durch in den Führungsschienen vorgesehene Unterbrechungen gewährleistet.

Ein Ausführungsbeispiel der Erfindung wird im folgenden anhand der Zeichnungen näher erläutert, und es zeigen:
- Fig. 1: einen vertikalen Längsschnitt durch den Schubladenascher,

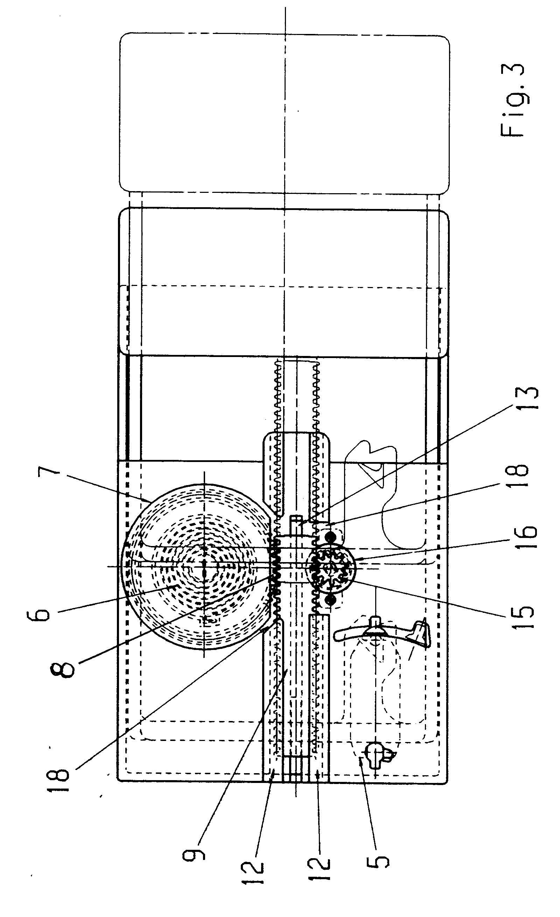

- Fig. 2: einen Schnitt etwa folgend der Linie II - II in Fig. 1 und
- Fig. 3: eine Ansicht auf die Unterseite des Aschergehäusebodens.

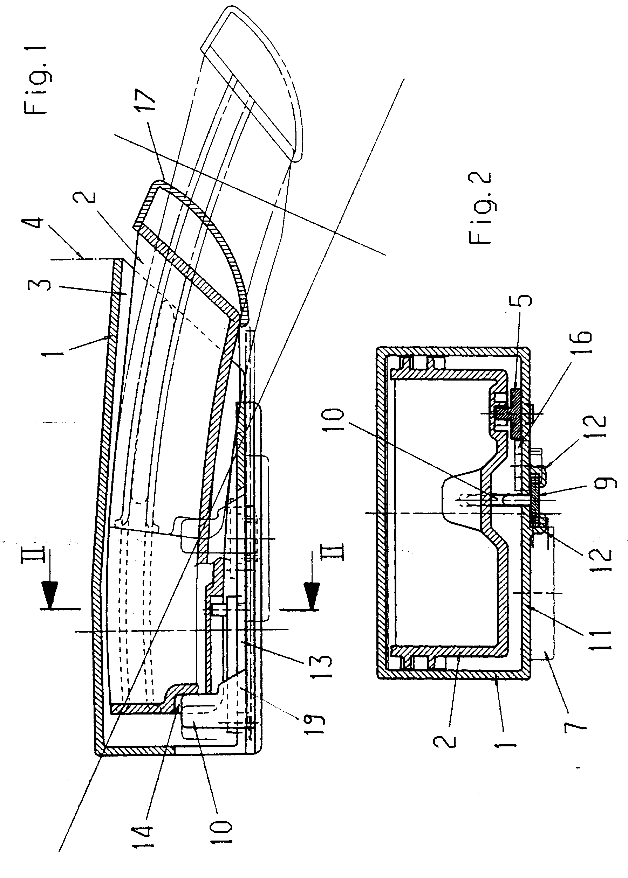

Der Schubladenascher besteht aus einem Aschergehäuse 1 und dem Aschertopf 2. Das Aschergehäuse 1 ist in einer Einbauöffnung 3, die z. B. in einer Armaturentafel 4 eines Fahrzeugs ausgebildet ist, eingesetzt und befestigt. Der Aschertopf 2 ist aus seiner mit durchgezogenen Linien dargestellten Nichtgebrauchslage in eine die Einwurföffnung desselben freigebende Gebrauchslage, die mit strichpunktierten Linien angedeutet ist, bewegbar. Der Aschertopf 2 durchläuft dabei, wie Fig. 1 verdeutlicht, eine bogenförmige Bewegungsbahn, was bei bestimmten Einbausituationen erforderlich ist. Die zwischen dem Aschergehäuse 1 und dem Aschertopf 2 vorgesehenen Führungsmittel sind herkömmlicher Art und daher im einzelnen nicht dargestellt. Gleiches gilt für die Tippautomatik zum Lösen einer auch schon bei Fahrzeugaschern üblichen Verriegelungseinrichtung, von der allerdings das Richtgesperre 5 mit gestrichelten Linien angedeutet ist.

Wesentlich für den neuen Schubladenascher ist die Ausbildung und Anordnung der Öffnungshilfe zum automatischen Befördern des Aschertopfs 2 aus der Nichtgebrauchslage in die Gebrauchslage. Diese Öffnungshilfe besteht aus einem Federmotor 6, der in einem flachen Gehäuse 7 untergebracht ist und ein Ritzel 8 aufweist, das mit der Verzahnung einer Zahnstange 9 kämmt, die einen Mitnehmer 19 mit einem Mitnehmersteg 10 besitzt, der gegenüber der Zahnstange senkrecht ausgerichtet ist. Der Federmotor 6 wird aus einer spiralförmig gewickelten Bandfeder, die z. B. einendig am Gehäuse 7 und anderendig an der Ritzelwelle befestigt ist, gebildet. Der Federmotor 6 mit Ritzel 8 ist in flachliegender Anordnung an der Unterseite des Gehäusebodens 11 befestigt. Am Gehäuseboden 11 ist unterseitig auch die Zahnstange 9 angeordnet geführt, und zwar nach einer Nut-Feder-Anordnung in Führungsschienen 12. Zwischen den Führungsschienen 12 befindet sich eine den Gehäuseboden 11 durchsetzende Schlitzöffnung 13 für den Mitnehmersteg 10. Der Mitnehmersteg 10 greift an der Rückwand des Aschertopfs 2, in der eine Aussparung 14 ausgebildet sein kann, an, wobei eine Anlageberührung über den gesamten Öffnungshub des Aschertopfs 2 gewährleistet ist.

Die Zahnstange 9 besitzt einen flachen rechteckigen Querschnitt und weist an beiden Schmalkanten eine Verzahnung auf. Eine Verzahnung kämmt mit dem Ritzel 8 und die andere mit einem weiteren Ritzel 15, das zu einer Bremse 16, z. B. Fettbremse gehört, die vorgesehen ist, um einem abrupten Anschlagen des Aschertopfs 2 am Ende des Öffnungshubs entgegenzuwirken. Die Führungsschienen 12 weisen jeweils in Höhe der Ritzel 8 und 15 Unterbrechungen 18 auf.

Der neue Schubladenascher arbeitet in an sich bekannter Weise. Durch ein leichtes Andrücken der Frontplatte 17 des Aschertopfs 2 wird die Verriegelungseinrichtung, die den Aschertopf 2 in der Nichtgebrauchslage hält, gelegt. Die gespannte Feder des Federmotors 6 treibt nun das Ritzel 8 an und befördert damit die Zahnstange 9 geradlinig in Öffnungsrichtung, die dabei über den Mitnehmersteg 10 den Aschertopf 2 mitnimmt, so daß dieser in die Gebrauchslage gelangt. Beim Einschieben des Aschertopfs 2 in die Nichtgebrauchslage wirkt die Aschertopfrückwand gegen den Mitnehmersteg 10, so daß die Zahnstange 9 ins Aschergehäuse 1 hineinbefördert wird, um dabei das Ritzel 8 entgegen der Öffnungsbewegung anzutreiben und die Feder des Federmotors 6 wieder zu spannen.

## Patentansprüche

1. Schubladenascher für Fahrzeuge mit einem in eine Einbauöffnung (3) einsetzbaren Aschergehäuse (1), einem darin beweglich geführten Aschertopf (2) und einer aus einem Federmotor (6) bestehenden Öffnungshilfe, um den Aschertopf (2) nach dem Lösen einer Verriegelungseinrichtung aus dem Aschergehäuse (1) heraus in die Gebrauchslage zu bewegen, wobei der Federmotor (6) ein Ritzel (8) antreibt, welches mit einer Zahnstange (9) kämmt, dadurch gekennzeichnet, daß die Zahnstange (9) geradlinig beweglich geführt ist und einen Mitnehmer (19) mit einem am Aschertopf (2) angreifenden Mitnehmersteg (10) aufweist, der eine Anlageberührung über den gesamten Öffnungsschub des Aschertopfs (2) gewährleistet.

2. Schubladenascher nach Anspruch 1, dadurch gekennzeichnet, daß der Mitnehmersteg (10) am freien Zahnstangenende angeordnet ist, etwa rechtwinklig zur Zahnstange (9) ausgerichtet ist und mit der Rückwand des Aschertopfs (2) in Anlageberührung steht.

3. Schubladenascher nach Anspruch 1 oder 2, dadurch gekennzeichnet, daß der Federmotor (6) in einem flachen zylindrischen Gehäuse (7) sitzt, das zusammen mit dem Ritzel (8) und ebenso wie die Zahnstange (9) an der Unterseite des Aschergehäusebodens (11) angeordnet ist, wobei der Gehäuseboden (11) eine Schlitzöffnung (13) zum Durchlaß des Mitnehmerstegs (10) aufweist.

4. Schubladenascher nach wenigstens einem der Ansprüche 1 bis 3, dadurch gekennzeichnet, daß sich an der Unterseite des Gehäusebodens (11) beidseitig der Schlitzöffnung (13) Führungsschienen (12) für die Halterung und Führung der Zahnstange (9) befinden.

5. Schubladenascher nach wenigstens einem der Ansprüche 1 bis 4, dadurch gekennzeichnet, daß die Zahnstange (9) einen rechteckigen Querschnitt und an beiden Schmalkanten eine Verzahnung aufweist, von denen die eine mit dem vom Federmotor (6) angetriebenen Ritzel (8) und die andere mit einem zu einer ebenfalls am Gehäuseboden (11) angeordneten Bremse (16) gehörenden Ritzel (15) kämmt.

6. Schubladenascher nach wenigstens einem der Ansprüche 1 bis 5, dadurch gekennzeichnet, daß die Führungsschienen (12) von den Ritzeln (8, 15) durchsetzte Unterbrechungen (18) aufweisen.

## Claims

1. Drawer-type ashtray for vehicles, having an ashtray housing (1) which can be inserted into a built-in opening (3), an ashtray pot (2) which is guided moveably in the said housing, and an opening aid, comprising a spring motor (6), in order, after release of a locking device, to move the ashtray pot (2) out of the ashtray housing (1) into the position of use, the spring motor (6) driving a pinion which meshes with a rack (9), characterized in that the rack (9) is guided such that it moves rectilinearly and has a driver (19) with a driver web (10) which engages on the ashtray pot (2) and ensures bearing contact over the entire opening travel of the ashtray pot (2).

2. Drawer-type ashtray according to Claim 1, characterized in that the driver web (10) is arranged at the free end of the rack, is aligned approximately rectilinearly with respect to the rack (9) and is in bearing contact with the rear wall of the ashtray pot (2).

3. Drawer-type ashtray accordant to Claim 1 or 2, characterized in that the spring motor (6) is seated in a flat, cylindrical housing (7) which is arranged, together with the pinion (8) and also the rack (9), on the underside of the ashtray-housing base (11), the housing base (11) having a slotted opening (13) for the driver web (10) to pass through.

4. Drawer-type ashtray according to at least one of Claims 1 to 3, characterized in that guide rails (12) for holding and guiding the rack (9) are located on the underside of the housing base (11), on both sides of the slotted opening (13).

5. Drawer-type ashtray according to at least one of Claims 1 to 4, characterized in that the rack (9) has a rectangular cross section and has a toothed portion on each of the narrow edges, one toothed portion meshing with the pinion (8) driven by the spring motor (6) and the other toothed portion meshing with a pinion (15) belonging to a brake (16) likewise arranged on the housing base (11).

6. Drawer-type ashtray according to at least one of Claims 1 to 5, characterized in that the guide rails (12) have gaps (18) through which the pinions (8, 15) pass.

## Revendications

1. Cendrier à tiroir pour véhicules comportant un boîtier de cendrier (1) insérable dans une ouverture de montage (3), un réceptacle de cendrier (2) guidé mobile dans celui-ci, et un auxiliaire d'ouverture constitué par un entraînement par ressort (6), afin de déplacer le réceptacle de cendrier (2) hors du boîtier de cendrier (1) dans la position d'utilisation après la libération d'un dispositif de verrouillage, l'entraînement par ressort (6) entraînant un pignon (8) qui s'engrène avec une crémaillère (9), caractérisé en ce que la crémaillère (9) est guidée en mouvement linéaire et présente un entraîneur (19) avec un ergot d'entraînement (10) venant en prise avec le réceptacle de cendrier (2), qui garantit un contact d'appui sur toute la course de poussée d'ouverture du réceptacle de cendrier (2).

2. Cendrier à tiroir selon la revendication 1, caractérisé en ce que l'ergot d'entraînement (10) est disposé à l'extrémité libre de la crémaillère, à peu près perpendiculairement à la crémaillère (9), et se trouve en contact d'appui avec la paroi arrière du réceptacle de cendrier (2).

3. Cendrier à tiroir selon la revendication 1 ou 2, caractérisé en ce que l'entraînement par ressort (6) repose dans un boîtier (7) cylindrique plat, qui est disposé, avec le pignon (8) et également avec la crémaillère (9) à la face inférieure du fond (11) du boîtier de cendrier, le fond du boîtier (11) présentant une ouverture fendue (13) pour le passage de l'ergot d'entraînement (10).

4. Cendrier à tiroir selon au moins l'une des revendications 1 à 3, caractérisé en ce que des rails de guidage (12) pour le maintien et le guidage de la crémaillère (9) se trouvent sur la face inférieure du fond du boîtier (11) de part et d'autre de l'ouverture fendue (13).

5. Cendrier à tiroir selon au moins l'une des revendications 1 à 4, caractérisé en ce que la crémaillère (9) présente une section transversale rectangulaire et une denture sur les deux arêtes étroites, dont l'une s'engrène avec le pignon (8) entraîné par l'entraînement à ressort (6) et l'autre avec un pignon (15) appartenant à un frein (16) également disposé sur le fond du boîtier (11).

6. Cendrier à tiroir selon au moins l'une des revendications 1 à 5, caractérisé en ce que les rails de guidage (12) présentent des interruptions (18) traversées par les pignons (8, 15).
